# EUROPÄISCHE PATENTSCHRIFT

(11) **EP 2 415 361 B1**
(45) Veröffentlichungstag und Bekanntmachung des Hinweises auf die Patenterteilung: **16.10.2013**
(21) Anmeldenummer: 11006659.4
(22) Anmeldetag: 12.08.2011
(51) Int. Cl.: A23L 1/314, A23L 1/315

(54) **Geflügelrohwurst, insbesondere Geflügelsalami und Verfahren zu deren Herstellung**
Raw poultry sausage, in particular poultry salami, and method for its manufacture
Saucisse crue de volaille, en particulier salami de volaille et son procédé de fabrication

(43) Veröffentlichungstag der Anmeldung: 08.02.2012
(62) Teilanmeldung aus: 11009156.8
(73) Patentinhaber: Heinrich Bille GmbH & Co. KG, 33803 Steinhagen (DE)
(72) Erfinder: Schöning, Fred, 33803 Steinhagen (DE)
(74) Vertreter: Hager, Thomas Johannes

(56) Entgegenhaltungen:
- EP-A1- 0 654 223
- EP-A1- 0 683 987
- EP-A2- 0 654 233
- EP-A2- 0 843 973
- CH-B1- 698 251
- DE-A1- 2 512 560
- FR-A1- 2 530 423
- US-A- 3 748 148
- DATABASE GNPD [Online] Mintel; Anonymous: "Salami with Pistachios", XP002660907, gefunden im www.gnpd.com Database accession no. 1484689

## Beschreibung

Geflügelrohwürste und darunter auch Geflügelsalamis, sind aus dem Stand der Technik bekannt. Sie enthalten, wie deren Pendants aus Schweinefleisch oder Rindfleisch, üblicherweise Fleisch- oder Wurstbrät, Salz, Gewürze, und andere Inhaltsstoffe. Durch die Verwendung von Geflügelfleisch zur Herstellung des Wurstbrät für Geflügelrohwürste ist der Fettgehalt und insbesondere der Triglyceridgehalt gegenüber Rohwürsten aus Schweine- oder Rindfleisch, deutlich gesenkt, so dass Geflügelrohwürste unter dem Gesichtspunkt von gesunder Ernährung gerade in letzter Zeit in den Fokus der Verbraucher gerückt sind. Während insbesondere in Rohwürsten aus Schweinefleisch der beigefügte Speck, der in Form von mehr oder weniger groben Partikeln in dem Wurstbrät eingelagert ist, zur Stabilisierung und Konsistenzgebung der Rohwürste beiträgt, ist es bei Geflügelrohwürsten aufgrund der Magerkeit des Fleisches erforderlich, zusätzlich Speck als Konsistenzgeber zuzusetzen oder alternativ dazu den Speck durch andere Konsistenzgeber zu ersetzen, um eine einfache Verfahrensführung der Herstellung von Geflügelrohwürsten zu gewährleisten und die typischen qualitativen Anforderungen, die an eine Geflügelrohwurst gestellt werden, erfüllen zu können. Hierzu werden üblicherweise Palmfett oder aber gehärtete Pflanzenöle eingesetzt, die aufgrund ihrer Festigkeit die zu verarbeitende Mischung der Inhaltsstoffe der Geflügelrohwurst bereits bei der Herstellung, sowie final auch die Struktur der Geflügelrohwurst, stabilisieren. Dieser Zusatz von Speck, Fett, also auch tierischem Fett von anderen Tieren als Gefiedertieren, wie auch pflanzlichem Fett, oder gehärteten Ölen ist aber, wiederum unter dem Gesichtspunkt von gesunder Ernährung, kontraproduktiv.

US 37 48 148 betrifft die Herstellung von Geflügelrohwurst, in der Fett durch Zerkleinerte Paranüsse ersetzt wird.

Aufgabe der Erfindung ist es, ein vereinfachtes Verfahren zur Herstellung von Geflügelrohwurst bereitzustellen, das ohne großen technischen bzw. finanziellen Aufwand umsetzbar ist, bei dem eine Geflügelrohwurst mit guter Konsistenz, Struktur und Stabilität erhalten wird. Ferner ist es Aufgabe der Erfindung, eine Geflügelrohwurst bereitzustellen, die sich durch eine sehr gute Qualität, also eine ausgezeichnete Konsistenz und Stabilität auch während der Lagerung, auszeichnet, deren visuelles Erscheinungsbild, sowie sensorische Eigenschaften beim Verzehr der Geflügelrohwurst vergleichbar oder besser sind als die entsprechenden Eigenschaften herkömmlicher Produkte.

Diese Aufgabe wird durch ein Verfahren mit den Merkmalen des Anspruchs 1 und eine Geflügelrohwurst mit den Merkmalen des Anspruchs 9 gelöst. Die Unteransprüche zeigen bevorzugte Weiterbildungen der Erfindung.

Das erfindungsgemäße Verfahren mit den Merkmalen des Anspruches 1 weist gegenüber herkömmlichen Verfahren unter Verwendung von Konsistenzgebern, also insbesondere von Palmfett, den Vorteil auf, dass durch das Zufügen von zerkleinerten Nüssen und/oder zerkleinerter Ölsaat zu einem Wurstbrät und/oder durch Zugabe von Nüssen und/oder Ölsaat zu einem Wurstbrät und anschließendem Zerkleinern dieser Nüsse und/oder Ölsaat, auf den Zusatz von Speck, Fett von anderen Tieren als Gefiedertieren, Palmfett, anderen pflanzlichen oder synthetischen Fetten und gehärteten pflanzlichen Ölen verzichtet werden kann, so dass eine hochqualitative Geflügelrohwurst und insbesondere Geflügelsalami, mit den für sie typischen geschmacklichen und physikalischen, also insbesondere sensorischen und stabilitätstechnischen Eigenschaften, erhalten wird, die zudem auch dem gewohnten Erscheinungsbild einer typischen Geflügelrohwurst entspricht. Die Geflügelrohwurst ist gegenüber herkömmlichen Geflügelrohwürsten an zugesetztem pflanzlichen, synthetischen und tierischen Fett von anderen Tieren als Gefiedertieren und gehärteten pflanzlichen Ölen, sowie Palmfett, reduziert. Das erfindungsgemäße Verfahren ist ohne hohen technischen, sowie organisatorischen und finanziellen Aufwand einfach umsetzbar und erlaubt eine Herstellung von Geflügelrohwürsten mit hohem Durchsatz.

Essentiell ist, dass die Nüsse und/oder Ölsaat zerkleinert werden, also die Nüsse und/oder Ölsaat in zerkleinertem Zustand im Endprodukt, der Geflügelrohwurst, vorliegen. Die Beigabe von ausschließlich unzerkleinerten Nüssen und/oder Ölsaat, ohne Zerkleinern der Nüsse und/oder Ölsaat bewirkt keine Stabilisierung, Strukturbildung oder Konsistenzerhöhung der Wurstmasse. Es wird angenommen, dass die zerkleinerten Nüsse und/oder zerkleinerte Ölsaat einen Kapillareffekt aufweisen und somit das in der Wurstmischung, also der Mischung aus Wurstbrät und zerkleinerten Nüssen und/oder zerkleinerter Ölsaat und ggf. weiteren üblichen Inhaltsstoffe, also hauptsächlich das in dem Wurstbrät enthaltene Wasser, insbesondere während der weiteren Verarbeitung der Wurstmischung zu der Geflügelrohwurst, aus dieser Wurstmischung effektiv, gleichmäßig und schnell ausgeleitet wird, was die Verfahrensführung beschleunigt und vereinfacht. Dadurch wird die Konsistenz, Struktur und damit die Stabilität der Wurstmischung und somit final auch der Geflügelrohwurst, deutlich verbessert. Die Geflügelrohwurst erhält hierdurch ihre charakteristische Struktur, die ferner ausschlaggebend für die Haltbarkeit, sowie die sensorischen und geschmacklichen Eigenschaften ist. Somit sind keine weiteren, die Konsistenz und Stabilität der Masse, sowie auch der Geflügelrohwurst beeinflussende Inhaltsstoffe notwendig. Mit anderen Worten wird angenommen, dass insbesondere während des Verarbeitens der Wurstmischung, und damit einer Mischung aus Wurstbrät, zerkleinerten Nüssen und/oder zerkleinerter Ölsaat und ggf. weiteren üblichen Inhaltsstoffen, also insbesondere bei der sich üblicherweise anschließenden Fermentation und/oder Trocknung der Geflügelrohwurst, durch die Anwesenheit von zerkleinerten Nüssen und/oder zerkleinerter Ölsaat, eine schnelle und homogene Wasserabgabe gefördert wird, die essentiell ist für die hohen qualitativen Eigenschaften der Geflügelrohwurst und eine unkomplizierte und effiziente Herstellung einer Geflügelrohwurst mit exzellenten physikalischen, sowie sensorischen und geschmacklichen Eigenschaften.

Unter einer Geflügelrohwurst im Sinne der Erfindung wird eine Rohwurst aus einer in herkömmlicher Weise weiterverarbeiteten Wurstmischung, enthaltend Wurstbrät, zerkleinerte Nüsse und/oder zerkleinerte Ölsaat und ggf. andere übliche Inhaltsstoffe, verstanden. Diese Rohwurst enthält einen üblichen Anteil an Geflügelbrät, also einen üblichen Anteil an rohem, zerkleinertem Fleisch von gefiederten Tieren (im Nachfolgenden: Geflügelfleisch). Dies bedeutet, dass beispielsweise definierte Mengen an Schweinefleisch und/oder Rindfleisch vorhanden sein können, wobei allerdings der Anteil an Geflügelfleisch in dem Wurstbrät vorzugsweise überwiegt. Hierbei wird zur Herstellung der erfindungsgemäßen Geflügelrohwurst insbesondere der gesetzlich vorgegebene maximale Grenzwert für den Zusatz an Schweine- oder Rindfleisch zu Geflügelbrät, der derzeit beispielsweise in Deutschland bei etwa 20 Gew.-% im fertigen Produkt liegt, eingehalten.

Nüsse im Sinne der Erfindung bezeichnen insbesondere essbare Samen von Nussfrüchten, also Nusskerne oder Nusssamen im botanischen Sinne, wie beispielsweise Haselnusskerne, Walnusskerne, Paranusskerne, Macadamianusskerne, Esskastanien, Bucheckern und andere. Ferner sind dem Begriff "Nüsse" auch essbare Kerne mit nussartigem Erscheinungsbild zuzurechnen, die im botanischen Sinne nicht zu "Nüssen", sondern beispielsweise zu den Hülsenfrüchten oder Steinfrüchten zählen, wie z.B. Erdnusskerne, Pecannüsse, Cashewkerne, Mandeln und Pistazien. Unter Ölsaat im Sinne der Erfindung werden essbare Pflanzensamen, d.h. Ölsamen verstanden, die zur Gewinnung von Pflanzenöl, also Speiseöl, verwendet werden können. Ölsaaten umfassen damit beispielsweise Sonnenblumenkerne, Leinsamen, Pinienkerne und Kürbiskerne.

Unter dem erfindungsgemäßen Verfahren wird ferner verstanden, dass sowohl ausschließlich eine Sorte von Nüssen oder aber eine Mischung unterschiedlicher Nüsse verwendet werden kann. Ferner können auch eine oder mehrere Sorten von Ölsaat oder aber Mischungen von einer oder mehreren Nusssorten mit einer oder mehreren Ölsaatsorten verwendet werden. Mit anderen Worten ist jede Kombination von Nusssorten und Ölsaatsorten möglich. So können die physikalischen Eigenschaften der Geflügelrohwurst, wie z.B. ihre Konsistenz, die wiederum bereits die Herstellung der Geflügelrohwurst direkt beeinflusst, als auch ihr Geschmack und sensorisches Geschmackserlebnis, gezielt gesteuert werden.

Das erfindungsgemäße Verfahren umfasst das Beifügen von zerkleinerten Nüssen und/oder zerkleinerter Ölsaat zu einem Wurstbrät bzw. zusätzlich oder alternativ dazu das Zugeben von unzerkleinerten Nüssen und/oder unzerkleinerter Ölsaat zu einem Wurstbrät und anschließendes Zerkleinern dieser Nüsse und/oder Ölsaat. Im ersten Fall werden die Nüsse und/oder Ölsaat beispielsweise separat in einer Zerkleinerungsvorrichtung zerkleinert bzw. in zerkleinertem Zustand bereitgestellt. Im zweiten Fall findet die Zerkleinerung beispielsweise zusammen mit dem Wurstbrät und ggf. weiteren optionalen Inhaltsstoffen statt, wobei das Wurstbrät seinerseits auch bereits vorzerkleinert vorliegen kann. Optional können die Nüsse und/oder Ölsaat sowohl vorzerkleinert als auch unzerkleinert dem Wurstbrät zugefügt werden.

Das Zerkleinern der Nüsse und/oder Ölsaat findet vorteilhafter Weise insbesondere in einem Kutter und/oder einem Fleischwolf oder Füllwolf statt, also in der Misch- und/oder Zerkleinerungsvorrichtung, in der auch das Wurstbrät verarbeitet wird. Das Kuttern, also das Zerkleinern und Mischen der Mischung aus Wurstbrät und Nüssen und/oder Ölsaat kann in einem handelsüblichen Kutter ausgeführt werden. Durch das Kuttern wird eine Zerkleinerung und Durchmischung der Wurstmischung erzielt. Ein Zerkleinern der Nüsse und/oder Ölsaat kann auch alternativ zum Kuttern oder zusätzlich dazu, in einem Fleischwolf oder Füllwolf ausgeführt werden. Auch hierfür können handelsübliche Fleischwolfe bzw. Füllwolfe verwendet werden, die beispielsweise eine Lochscheibe mit Bohrungen in gewünschter Endkorngröße der Geflügelrohwurst, aufweisen.

Gemäß einer bevorzugten Ausführungsform des erfindungsgemäßen Verfahrens, wird auf die Zugabe von Speck, Fett von anderen Tieren als Gefiedertieren, Palmfett und gehärteten pflanzlichen Ölen verzichtet. Dies ist ferner so zu verstehen, dass auch auf den Zusatz anderer, möglicher pflanzlicher Fette, sowie synthetischer Konsistenzgeber verzichtet wird. Da die zerkleinerten Nüsse und/oder zerkleinerte Ölsaat eine ausreichende Konsistenz- und Strukturbildung sowohl der Wurstmasse, als auch final der Geflügelrohwurst, fördern, ist eine Zugabe von herkömmlichen Konsistenzgebern, Speck, Fett von anderen Tieren als Geflügeltieren, Palmfett oder gehärteten pflanzlichen Ölen nicht erforderlich. Die auf diese Weise hergestellte Geflügelrohwurst ist damit speckfrei, palmfettfrei, frei von Fetten anderer Tiere als Gefiedertieren und auch frei von gehärteten Pflanzenölen, was aus gesundheitlichen und nahrungsmitteltechnischen Gründen vorteilhaft ist und somit eine hohe Marktakzeptanz fördert. Weiter vorteilhaft macht der Anteil an Geflügelfleisch den größten Teil in dem Wurstbrät aus. Vorzugsweise beträgt der Anteil an Geflügelfleisch in dem erfindungsgemäß verwendeten Wurstbrät 100%. Mit anderen Worten besteht das Wurstbrät vorzugsweise aus reinem Geflügelbrät. Dies ist ebenfalls aus nahrungsmitteltechnischer wie gesundheitlicher Sicht von Vorteil.

Erfindungswesentlich ist, dass die Nüsse und/oder Ölsaat vor der Zugabe zu dem Wurstbrät in siedendem Wasser abgekocht werden, wobei die Kochzeit maximal etwa 20 min, insbesondere maximal etwa 10 min und insbesondere maximal etwa 5 min beträgt. Durch das Abkochen der Nüsse und/oder Ölsaat werden zum einen die besagten Nüsse und/oder Ölsaat gereinigt und potentielle Keime abgetötet. Zum anderen wird dadurch deren Oberfläche vorgequollen, so dass die Nüsse und/oder Ölsaat besser an das Wurstbrät gebunden werden. Durch das Abkochen wird ferner die Kapillarwirkung der zerkleinerten Nüsse und/oder zerkleinerten Ölsaat erhöht. Das in dem Wurstbrät enthaltene Wasser kann somit auch während der Weiterverarbeitung zu Geflügelrohwurst leichter ausgeleitet werden, wodurch die Konsistenz und Struktur der Mischung, sowie diejenige des Endproduktes, also der Geflügelrohwurst, einfacher gesteuert und folglich in wünschenswerter Weise erhöht werden kann. Erfindungsgemäß können die Nüsse und/oder Ölsaat sowohl in ganzer Form oder aber in bereits zerkleinerter Form abgekocht werden. In der Regel ist eine Kochzeit von 20 min ausreichend, um die erwünschten Effekte, also insbesondere ein Vorquellen der Oberfläche der Nüsse und/oder Ölsaat zu erzielen. Kürzere Kochzeiten von 10 min oder sogar 5 min verringern die Produktionskosten deutlich. Die geeignete Kochzeit kann der Fachmann leicht durch Vergleichsversuche herausfinden.

Weiter vorteilhaft wird das erfindungsgemäße Verfahren so gesteuert, dass eine Endkörnung der Nüsse und/oder Ölsaat in der Geflügelrohwurst maximal 4 mm, insbesondere maximal 3 mm und insbesondere maximal 2 mm beträgt. Unter der Endkörnung wird erfindungsgemäß die maximale Korngröße der Nüsse und/oder Ölsaat verstanden, die in dem Endprodukt, also der Geflügelrohwurst, vorliegt. Das Einstellen der Endkörnung der Nüsse und/oder Ölsaat kann entweder durch separates Zerkleinern von Nüssen und/oder Ölsaat vor Zugabe zu dem Wurstbrät, oder aber durch das Kuttern und/oder Wolfen zusammen mit der Wurstmischung aus Wurstbrät und ggf. weiteren Inhaltsstoffen, erfolgen. Zum Erreichen der gewünschten maximalen Endkörnung spielen insbesondere die technischen und damit baulichen Eigenschaften der verwendeten Zerkleinerungsvorrichtung, die Zerkleinerungszeit, Temperatur während des Zerkleinerns, sowie ggf. die Konsistenz, also die Viskosität und damit die Fließeigenschaften der zu zerkleinernden Mischung, eine entscheidende Rolle. Die erforderlichen Parameter kann der Fachmann leicht durch Vergleichsversuche herausfinden. Bei einer maximalen Endkörnung der Nüsse und/oder Ölsaat von 4 mm wird ein ausreichender, die Konsistenz sowohl der Wurstmischung, enthaltend Wurstbrät und zerkleinerte Nüsse und/oder zerkleinerte Ölsaat und ggf. weitere übliche Inhaltsstoffe, als auch der final hergestellten Geflügelrohwurst, sowie ein deren Stabilität und Struktur verbessernden Effekt, erzielt. Das Wasser kann aufgrund der sehr guten Kapillarkräfte der so zerkleinerten Nüsse und/oder zerkleinerten Ölsaat effizient Weise ausgeleitet werden, wodurch die erfindungsgemäße Geflügelrohwurst ihre typische Struktur, sowie sensorischen und geschmacklichen Eigenschaften erhält. Diese vorteilhaften Effekte können noch erhöht werden, wenn die Endkörnung der Nüsse und/oder Ölsaat 3 mm oder sogar nur 2 mm beträgt. Gerade in einem Bereich zwischen 2 mm und 3 mm zeigt sich eine besonders gute Stabilisierung der Wurstmischung, die sich auch im Endprodukt, also der zu Geflügelrohwurst weiterverarbeiteten Wurstmischung widerspiegelt. Eine weitere Reduktion der Endkörnung der Nüsse und/oder Ölsaat kann zwar erfolgen, bewirkt aber auf der einen Seite keine weitere merkliche Steigerung der Konsistenz der Wurstmischung und bedingt auf der anderen Seite eine Erhöhung der Produktionskosten, da zur Erzielung einer noch geringeren Endkörnung die Zerkleinerungszeit deutlich erhöht werden muss. Eine Endkörnung von maximal 4 mm und insbesondere von maximal 3 mm oder sogar 2 mm hat noch weitere Vorteile: zum Einen kann auf diese Weise ein besonders homogenes Erscheinungsbild der Geflügelrohwurst erzielt werden und zum Anderen ist auch die geschmackliche Präsenz der Nüsse und/oder Ölsaat durch deren gleichmäßige Verteilung in der Geflügelrohwurst nicht zu dominant, so dass der erwünschte Fleischgeschmack nicht wesentlich überdeckt wird.

Gemäß einer weiteren vorteilhaften Ausführungsform des erfindungsgemäßen Verfahrens sind die Nüsse und/oder Ölsaat ausgewählt aus Haselnüssen, Erdnüssen, Macadamianüssen, Pecannüssen, Paranüssen, Pinienkernen, Walnüssen, Esskastanien, Bucheckern, Mandeln, Sonnenblumenkernen, Leinsamen, Kürbiskernen, Cashewkernen und Pistazien. Die hier genannten Nüsse bzw. Ölsaaten haben sich als besonders vorteilhaft hinsichtlich der Erhöhung der Konsistenz und damit der Stabilität der Wurstmischung, so wie auch der daraus hergestellten Geflügelrohwurst, als vorteilhaft erwiesen. Diese Nüsse und/oder Ölsaaten können sowohl einzeln, also auch in beliebigen Mischungen verarbeitet werden. Als besonders vorteilhaft haben sich Haselnüsse, Walnüsse und Sonnenblumenkerne und insbesondere Sonnenblumenkerne erwiesen, da diese zudem über einen feinen nussigen Charakter verfügen, der das geschmackliche Bild der Geflügelsalami abrundet. Zudem ist der stabilisierende und konsistenzgebende Effekt, insbesondere der Sonnenblumenkerne besonders stark ausgeprägt, so dass die Verwendung von Sonnenblumenkernen auch aus diesem Grund besonders vorteilhaft ist. Darüber hinaus sind Sonnenblumenkerne gut erhältlich und relativ preiswert im Vergleich zu vielen anderen Nusssorten.

Weiter vorteilhafter Weise beträgt der Anteil an zerkleinerten Nüssen und/oder zerkleinerter Ölsaat mindestens 10 Gew.-% und insbesondere mindestens 15 Gew.-%, bezogen auf das Gesamtgewicht der Wurstmischung enthaltend Wurstbrät und zerkleinerte Nüsse und/oder zerkleinerte Ölsaat und ggf. weitere übliche Inhaltsstoffe. Ein Anteil an 10 Gew.-% und mehr bezogen auf das Gesamtgewicht der Wurstmischung ist in der Regel ausreichend, um einen deutlichen, die Konsistenz und Struktur der Mischung erhöhenden Effekt, sowie einen ausreichenden Kapillareffekt bereitzustellen, wodurch die Verfahrensführung vereinfacht und beschleunigt wird. Geringere Anteile an zerkleinerten Nüssen und/oder zerkleinerter Ölsaat erhöhen zwar ebenso die Konsistenz der Wurstmischung und damit die Konsistenz, Struktur und Stabilität der hergestellten Geflügelrohwurst, und sind somit möglich, allerdings kann der gewünschte Effekt je nach verwendeter Nusssorte und/oder Ölsaat, sowie eingestellter Endkörnung, variieren und auch geringer sein. Je höher der Anteil an Nüssen und/oder Ölsaat, desto größer ist der erwünschte Effekt der Konsistenzerhöhung, und Stabilitätserhöhung und auch der Kapillareffekt, der für die qualitativen Eigenschaften der Geflügelrohwurst entscheidend ist. Hierbei haben sich mindestens 15 Gew.-% und insbesondere 15 bis 20 Gew.-% bezogen auf das Gesamtgewicht der Wurstmischung, enthaltend Wurstbrät und Nüsse und/oder Ölsaat, als besonders vorteilhaft erwiesen, insbesondere bei Verwendung von Sonnenblumenkernen, und insbesondere bei Einstellung deren Endkörnung auf maximal 4 mm. Die Obergrenze des Anteils an Nüssen und/oder Ölsaat ist im Einzelnen nicht beschränkt. Ab einem Anteil von mehr als 30 Gew.-% an Nüssen und/oder Ölsaat, tritt der geschmackliche Charakter der Nüsse und/oder Ölsaat so stark in den Vordergrund, dass das Geschmackserlebnis deutlich von dem einer gewöhnlichen Geflügelrohwurst abweicht, was in der Regel zu einer reduzierten Akzeptanz durch den Verbraucher führt. Die geeignete Menge an zerkleinerten Nüssen und/oder zerkleinerter Ölsaat kann der Fachmann leicht durch Vergleichsversuche herausfinden.

Gemäß einer weiteren vorteilhaften Ausführungsform des erfindungsgemäßen Verfahrens beträgt das Mischverhältnis Wurstbrät zu zerkleinerten Nüssen und/oder zerkleinerter Ölsaat in einer Wurstmischung, enthaltend Wurstbrät und Nüsse und/oder Ölsaat und ggf. weitere übliche Inhaltsstoffe, 18:1 bis 2:1, insbesondere 9,5:1 bis 3,5:1 und insbesondere 6,9:1 bis 4,9:1. Werden Wurstbrät und zerkleinerte Nüsse und/oder zerkleinerte Ölsaat in den hier genannten Verhältnissen, also zumindest im Verhältnis von 18:1 bis 2:1 und vorzugsweise von 9,5:1 bis 3,5:1 und mehr bevorzugt von 6,9:1 bis 4,9:1, verwendet, so kann eine deutliche Konsistenzerhöhung und Strukturbildung der Wurstmischung und damit final eine Geflügelrohwurst mit ausgezeichneten physikalischen, sensorischen und geschmacklichen Eigenschaften hergestellt werden. Andere Mischverhältnisse sind möglich, allerdings können die erwünschten positiven Effekte entsprechend geringer oder stärker ausfallen. Das geeignete Verhältnis Wurstbrät zu Nüssen und/oder Ölsaat kann der Fachmann leicht durch Vergleichsversuche herausfinden.

Vorteilhafter Weise umfasst das erfindungsgemäße Verfahren einen Schritt des Kutterns und/oder des Wolfens, wobei insbesondere die Temperatur beim Kuttern und/oder Wolfen maximal 0 °C und insbesondere maximal -2 °C, beträgt, und/oder wobei insbesondere eine Endlochscheibe eines Füllwolfes Bohrungen von maximal 4 mm, insbesondere maximal 3 mm und insbesondere maximal 2 mm, aufweist. Die o.g. Temperaturführung ist vorteilhaft, weil so das Wurstbrät in seinem rohen Zustand erhalten bleibt, was wichtig ist für den Rohwurstcharakter und die Qualität der Geflügelrohwurst. Ferner wird durch diese niedrigen Temperaturen die Verarbeitung des Wurstbrät erleichtert, da das Eiweiß des Wurstbrät am Schmieren gehindert wird. Durch Verwendung eines Wolfes oder Füllwolfes und insbesondere eines Vakuumfüllwolfes, kann die abzufüllende Masse, falls gewünscht, noch auf eine feinere Endkörnung gebracht werden. Zumeist ist es vorteilhaft, in einem Kutter eine Vorzerkleinerung der Wurstmischung aus Wurstbrät und Nüssen und/oder Ölsaat und ggf. weiteren üblichen Inhaltsstoffen, auf eine Körnung von beispielsweise 5 bis 10 mm und insbesondere 5 bis 7 mm vorzunehmen und dann die Endkörnung final im Fleischwolf durch Verwendung einer entsprechenden Lochscheibe mit Bohrungen von vorzugsweise maximal 4 mm und insbesondere von maximal 2 bis 3 mm Durchmesser, zu verfeinern. Dies erhöht die Stabilität des Endproduktes und optimiert den visuellen Charakter. Ferner ist die hier angeführte Verfahrensführung einfach, effektiv und zeitsparend.

Gemäß einer weiteren vorteilhaften Ausführungsform des erfindungsgemäßen Verfahrens wird eine Wurstmischung, enthaltend Wurstbrät und zerkleinerte Nüsse und/oder zerkleinerte Ölsaat und ggf. weitere übliche Inhaltsstoffe, in Form gebracht, also beispielsweise in Vorratsbehälter abgefüllt, insbesondere in Därme abgefüllt. Als Vorratsgefäße kommen alle üblichen hierfür verwendeten Gefäße in Betracht. Geeignete Därme können sowohl Kunstdärme als auch Naturdärme sein.

Das erfindungsgemäße Verfahren zeichnet sich durch eine einfache, kostengünstige und effiziente Verfahrensführung aus. Durch Verwendung von zerkleinerten Nüssen und/oder zerkleinerter Ölsaat als Ersatz für tierischen Speck, tierisches Fett von anderen Tieren als Gefiedertieren, Palmfett und gehärtete pflanzliche Öle, kann die Konsistenz der Wurstmischung, enthaltend Wurstbrät und zerkleinerte Nüssen und/oder zerkleinerte Ölsaat, sowie ggf. weiteren üblichen Inhaltsstoffen, gezielt gesteuert werden, was nicht nur den Verfahrensablauf vereinfacht, sondern auch die Herstellung einer besonders hoch qualitativen, gut strukturierten, stabilen und geschmacklich, sowie sensorisch herausragenden Geflügelrohwurst erlaubt, die aufgrund ihrer exzellenten Eigenschaften, und insbesondere den verringerten Gehalt an zugesetzten gehärteten pflanzlichen Ölen, Speck, tierischem Fett von anderen Tieren als Gefiedertieren und Palmfett, über eine hohe Marktakzeptanz verfügt. Diese hervorragenden Eigenschaften werden durch den essentiellen Schritt des Zerkleinerns der Nüsse und/oder Ölsaat und/oder durch den Zusatz von zerkleinerten Nüssen und/oder zerkleinerter Ölsaat, erzielt

Übliche Verfahrensschritte können das erfindungsgemäße Verfahren komplettieren. So können beispielsweise die Nüsse und/oder Ölsaat, wie bereits ausgeführt, bereits vor Zugabe zu dem Wurstbrät und ggf. anderen üblichen Inhaltsstoffen, zerkleinert werden und somit in bereits zerkleinertem Zustand dem Wurstbrät in einem Kutter und/oder einem Fleischwolf, zugefügt werden. Vorzugsweise werden ganze Nüsse oder Ölsaat bzw. Ölsaaten in ganzer Form direkt in einen Kutter und/oder einen Fleischwolf oder Füllwolf dem Wurstbrät zugeführt, da somit ein zusätzlicher, separater Zerkleinerungsschritt der Nüsse und/oder Ölsaat, vermieden werden kann. Allerdings kann ein vorheriges Zerkleinern zumindest eines Teils der Nüsse und/oder Ölsaat beispielsweise dann vorteilhaft sein, wenn diese Nüsse und/oder Ölsaat mit einer feineren Körnung als beispielsweise die durch das Kuttern und/oder Wolfen zu erzielende Endkörnung, vorliegen sollen, beispielsweise bei der Verwendung von geschmacklich stark dominierenden Nüssen, wie Walnüssen. Somit wird deren Geschmack wesentlich homogener in dem Wurstbrät verteilt und tritt somit in der Geflügelrohwurst nicht zu stark in den Vordergrund. Alternativ kann das Wurstbrät bereits vor Zugabe der Nüsse und/oder Ölsaat bzw. Ölsaaten beispielsweise in einem Kutter zerkleinert werden. So kann eine größere Endkörnung der Nüsse und/oder Ölsaat in der Mischung erzielt werden. Dies ist vorteilhaft, wenn zumindest ein Teil der Nüsse und/oder Ölsaat als Sichteinlage in der Geflügelwurst erwünscht ist. Auf die hier dargestellten Weisen wird eine Wurstmischung an Wurstbrät und Nüssen und/oder Ölsaat erhalten, die unterschiedliche Endkörnungen der jeweiligen Inhaltsstoffe der Wurstmischung aufweisen können. So können beispielsweise Nüsse und/oder Ölsaat auch in unzerkleinertem Zustand, quasi als Sichteinlage, vorhanden sein, sofern ein ausreichender Anteil an Nüssen und/oder Ölsaat in zerkleinertem Zustand vorliegt, der die Verfahrensführung in oben beschriebener, vorteilhafter Weise fördert. Weitere übliche Verfahrensschritte wie das Abfüllen, und/oder Fermentieren und/oder Trocknen und/oder Reifen und/oder Räuchern der Wurstmischung können sich anschließen. Durch diese weitere Verfahrensführung werden der typische Charakter und das typische Aussehen der Geflügelrohwurst gefördert.

Nach dem Kochen der Nüsse und/oder Ölsaat kann es vorteilhaft sein, die Nüsse und/oder Ölsaat bzw. Ölsaaten einem Trocknungsschritt zuzuführen, am Einfachsten durch Abtropfenlassen des Wassers durch ein Sieb, oder aber durch Verblasen der Wasserrückstände, beispielsweise mittels warmer Luft.

Ferner kann die Wurstmischung, enthaltend Wurstbrät und Nüsse und/oder Ölsaat auch weitere, für Geflügelrohwürste übliche, Inhaltsstoffe enthalten, die in einem beliebigen Stadium des Verfahrens zugefügt werden können, beispielsweise direkt zusammen mit den Nüssen und/oder der/den Ölsaaten, oder aber zuvor oder aber im Anschluss an ein Kuttern und/oder Wolfen. Etwaige zusätzliche Inhaltsstoffe umfassen beispielsweise: Salze, Zucker, Starterkulturen, insbesondere für die Fermentation, also die Reifung, wie beispielsweise Milchsäurebakterien, Färbemittel, Gewürze, Antioxidantien, pH-Regulatoren, Konservierungsmittel, Aromen, Geschmacksverstärker und Mischungen daraus. Diese Inhaltsstoffe werden vorzugsweise gekuttert, um sie homogen in der Mischung zu verteilen.

Erfindungsgemäß wird auch eine Geflügelrohwurst und insbesondere Geflügelsalami, beschrieben, die Wurstbrät und zerkleinerte Nüsse und/oder zerkleinerte Ölsaat enthält. Durch den Gehalt an zerkleinerten Nüssen und/oder zerkleinerter Ölsaat, die vor der Zugabe zum Wurstbrät in siedendem Wasser für eine Kochzeit von maximal etwa 20 min, insbesondere maximal etwa 10 min und insbesondere maximal etwa 5 min abgekocht wurden wird die Konsistenz und Stabilität der Geflügelrohwurst und somit die Qualität und Lagerstabilität erhöht, ohne dass das Geschmackserlebnis und das so genannte Mundgefühl oder Bissgefühl, die sensorischen Eigenschaften beim Verzehr, nachteilig beeinflusst werden. Die erfindungsgemäße Geflügelrohwurst kann aufgrund des Zusatzes von zerkleinerten Nüssen und/oder zerkleinerter Ölsaat frei sein von Speck, Fett von anderen Tieren als Gefiedertieren, Palmfett und gehärteten pflanzlichen Ölen, die in herkömmlichen Geflügelrohwürsten zur Erhöhung von deren Stabilität erforderlich sind.

Die bereits für das erfindungsgemäße Verfahren beschriebenen Eigenschaften, vorteilhaften Effekte, Wirkungsweisen, sowie die Ausführungsformen des erfindungsgemäßen Verfahrens, finden auch Anwendung für die erfindungsgemäße Geflügelrohwurst und insbesondere Geflügelsalami. Ebenso eignet sich das erfindungsgemäße Verfahren zur Herstellung der erfindungsgemäßen Geflügelrohwurst, und insbesondere Geflügelsalami.

Vorzugsweise beträgt der Anteil an zerkleinerten Nüssen und/oder zerkleinerter Ölsaat in der erfindungsgemäßen Geflügelrohwurst mindestens 14 Gew.-% insbesondere mindestens 20 Gew.-%, und insbesondere 20 bis 28 Gew.-% bezogen auf das Gesamtgewicht der Geflügelrohwurst. So verfügt die erfindungsgemäße Geflügelrohwurst, neben dem für sie typischen Erscheinungsbild, über ausgezeichnete sensorische, geschmackliche und qualitative Eigenschaften. Der Anteil an zerkleinerten Nüssen und/oder zerkleinerter Ölsaat in der Geflügelrohwurst ist, bedingt durch den Fermentationsprozess und/oder Reifungsprozess und damit ausgelösten Masseverlust, also Wasserverlust, dabei zumeist höher als in der Wurstmischung, wobei der Masseverlust in der Regel etwa 10 bis 40 Gew.-% beträgt.

Gemäß einer weiteren vorteilhaften Ausführungsform der erfindungsgemäßen Geflügelrohwurst ist diese frei von Speck, tierischem Fett von anderen Tieren als Gefiedertieren, Palmfett und gehärteten pflanzlichen Ölen. Durch den Gehalt an zerkleinerten Nüssen und/oder zerkleinerter Ölsaat wird die Konsistenz und damit die Stabilität der erfindungsgemäßen Geflügelrohwurst vorteilhaft beeinflusst. Dadurch kann auf die sonst zu diesem Zwecke verwendeten Fette, also beispielsweise Speck, Palmfett und gehärtete pflanzliche Öle, verzichtet werden. Die erfindungsgemäße Geflügelrohwurst ist somit palmfettfrei, speckfrei, frei von synthetischen Fetten, tierischen Fetten von anderen Tieren als Gefiedertieren und frei von gehärteten pflanzlichen Ölen, sowie anderen üblicherweise zugesetzten pflanzlichen Fetten und damit sehr gut geeignet für eine gesundheitsbewusste und nahrungsmitteltechnisch bewusste Ernährung, was die Verbraucherakzeptant erhöht. Weiter vorteilhaft macht der Anteil an Geflügelfleisch den größten Teil in dem Wurstbrät aus. Vorzugsweise beträgt der Anteil an Geflügelfleisch in dem erfindungsgemäß verwendeten Wurstbrät 100%. Mit anderen Worten besteht das Wurstbrät vorzugsweise aus reinem Geflügelbrät. Dies ist ebenfalls aus gesundheitlicher, wie nahrungsmitteltechnischer Sicht von Vorteil.

Zu Wurstbrät im Sinne der Erfindung kann jegliche Art von Gefiedertierfleisch verarbeitet werden, üblicherweise Entenfleisch, Wachtelfleisch, Gänsefleisch, Straußenfleisch, Taubenfleisch, Putenfleisch oder Hühnchenfleisch oder Mischungen daraus, wobei die zulässigen Höchstgrenzen für den Zusatz von Schweinefleisch und Rindfleisch eingehalten werden. Vorteilhafterweise ist das Wurstbrät aus Putenfleisch und/oder Hühnchenfleisch, insbesondere aus Putenbrust und/oder Hühnchenbrust. Putenfleisch und Hühnchenfleisch sind gut bekömmliche, preiswerte Geflügelfleischsorten mit hoher Verbraucherakzeptanz, die sich auch durch sehr gute qualitative Eigenschaften auszeichnen. Insbesondere Putenbrust und/oder Hühnchenbrust sind aufgrund ihres fettreduzierten und damit nahrungsmitteltechnisch einwandfreien Charakters deutlich bevorzugt.

Vorteilhafter Weise beträgt die Endkörnung der Nüsse und/oder Ölsaat in der Geflügelrohwurst maximal 4 mm, insbesondere maximal 3 mm und insbesondere maximal 2 mm, was, wie bereits ausgeführt, hinsichtlich der physikalischen Eigenschaften, der Konsistenz und Stabilität, sowie der sensorischen und geschmacklichen Eigenschaften der erfindungsgemäßen Geflügelrohwurst, vorteilhaft ist.

Gemäß einer weiteren vorteilhaften Ausführungsform der Erfindung beträgt das Mischverhältnis Wurstbrät zu zerkleinerten Nüssen und/oder zerkleinerter Ölsaat in der Geflügelrohwurst 12:1 bis 1:1, insbesondere 6:1 bis 2:1 und insbesondere 4,3:1 bis 3:1, was ebenfalls, wie bereits ausgeführt, im Hinblick auf die bereits genannten vorteilhaften Eigenschaften der erfindungsgemäßen Geflügelrohwurst von Vorteil ist.

Weiter erfindungsgemäß wird die Verwendung von zerkleinerten, in siedendem Wasser mit einer maximalen Kochzeit von etwa 20 min, insbesondere von maximal 10 min und insbesondere von maximal 5 min abgekochten Nüssen und/oder zerkleinerter Ölsaat zur Stabilisierung von speckfreier, palmfettfreier, von zugesetztem pflanzlichen, synthetischen und tierischen Fett von anderen Tieren als Gefiedertieren freier, und von gehärteten pflanzlichen Ölen freier Geflügelrohwurst, und insbesondere Geflügelsalami, beschrieben. Zerkleinerte Nüsse und/oder Ölsaat können erfindungsgemäß als Austauschstoff für Speck, Palmfett und gehärtete pflanzliche Öle eingesetzt werden, da sie ebenfalls einen die Konsistenz und Stabilität sowohl der Wurstrohmasse, wie auch der final hergestellten Geflügelrohwurst beeinflussenden Effekt, aufweisen. Als besonders vorteilhaft in dieser Hinsicht hat sich die Verwendung von zerkleinerten Sonnenblumenkernen erwiesen.

### - Beispiele -

Sofern nicht anderweitig angegeben, beziehen sich die gemachten Mengenangaben auf das Gesamtgewicht der zu kutternden Mischung.

### Beispiel 1: Erfindungsgemäßes Beispiel

| Rohstoff | Menge [Gew.-%] |
|---|---|
| Hühnchenbrustfleisch | 37,5 |
| Putenoberkeulenfleisch | 37,5 |
| Sonnenblumenkerne | 15 |
| NaCl | 3,05 |
| Starterkulturen | 0,25 |
| Maltodextrin | 1,5 |
| Dextrose | 3,0 |
| Saccharose | 2,0 |
| Ascorbinsäure | 0,2 |

Die Sonnenblumenkerne (ohne Schale) wurden in einem Kochtopf mit Wasser, bei der Siedetemperatur von Wasser für 5 Minuten gekocht und anschließend auf einem Sieb abgetropft. In einem handelsüblichen Kutter wurde das Hühnchenbrustfleisch sowie das Putenoberkeulenfleisch bei -2 °C für etwa 3 Minuten zu Wurstbrät vorzerkleinert und gemischt. Anschließend wurden die Sonnenblumenkerne, sowie die übrigen Rohstoffe zugegeben und die Mischung für weitere 2 Minuten bei -2 °C gekuttert, bis die Körnung sowohl der Sonnenblumenkerne, als auch des Fleisches, maximal 6 mm betrug. Die Masse war homogen und von guter Konsistenz, so dass eine schnelle, einfache und gleichförmige Zerkleinerung der Masse beobachtet wurden. Die Wurstmasse wurde anschließend in einem handelsüblichen Vakuumfleischwolf bzw. Vakuumfüllwolf mit einer Endlochscheibe mit Bohrungen von 2 bis 3 mm unter Vakuum in synthetische Därme mit einem maximalen Durchmesser von 10 cm abgefüllt. Die Würste wurden für 48 Stunden bei einer Temperatur von 25 °C und einer Luftfeuchtigkeit von etwa 95% fermentiert. Anschließend wurde die Temperatur während 14 Tagen schrittweise auf 15 °C und die Luftfeuchtigkeit auf 75% abgesenkt. Während dieser Reifungsphase bzw. Trocknungsphase wurden die Würste ferner für ca. 4 bis 6 Stunden Glimmrauch ausgesetzt, so dass die Würste geräuchert wurden. Nach dieser Fermentations-Reifungs-und Trocknungsphase zeigte der Anschnitt der Geflügelrohwurst ein homogenes Schnittbild, in dem die Sonnenblumenkernstücke als feine farbliche Akzente zu erkennen waren, wie es in üblichen Salamiprodukten üblich ist. Der Geschmack der Geflügelrohwurst wurde überwiegend von dem Hühnchenfleisch bestimmt, wobei eine minimale, feine nussige Note bemerkbar war, die den Geschmack abrundete. Die Geflügelrohwurst war zart und weich und gab auf Druck nach, ohne dass die zerkleinerten Sonnenblumenkerne aus der Wurstmasse herausgedrückt wurden oder die Wurst anderweitig zerdrückt wurde. Die Konsistenz und Stabilität der hergestellten Geflügelrohwurst war selbst bei Lagerung über mehrere Wochen bei Raumtemperatur mit einer herkömmlichen Geflügelrohwurst vergleichbar. Der Wasserverlust nach der Fermentations- Reifungs- und Trocknungsphase betrug durchschnittlich 30%.

### Beispiel 2: Vergleichsbeispiel

| Rohstoff | Menge [Gew.-%] |
|---|---|
| Hühnchenbrustfleisch | 45,0 |
| Putenoberkeulenfleisch | 45,0 |
| NaCl | 3,05 |
| Starterkulturen | 0,25 |
| Maltodextrin | 1,5 |
| Dextrose | 3,0 |
| Saccharose | 2,0 |
| Ascorbinsäure | 0,2 |

In einem handelsüblichen Kutter wurde das Hühnchenbrustfleisch sowie das Putenoberkeulenfleisch bei -2 °C für etwa 3 Minuten zu Wurstbrät vorzerkleinert und gemischt. Anschließend wurden die übrigen Rohstoffe zugegeben und die Mischung für weitere 2 Minuten bei -2 °C gekuttert, bis die Körnung des Fleisches, maximal 6 mm betrug. Die Masse war homogen aber von schmieriger Konsistenz. Die Wurstmasse wurde anschließend in einem handelsüblichen Vakuumfleischwolf bzw. Vakuumfüllwolf mit einer Endlochscheibe mit Bohrungen von 2 bis 3 mm unter Vakuum in synthetische Därme mit einem maximalen Durchmesser von 10 cm abgefüllt. Das Abfüllen gestaltete sich als schwierig, da die Masse stark schmierte. Die Würste wurden für 48 Stunden bei einer Temperatur von 25 °C und einer Luftfeuchtigkeit von etwa 95% fermentiert. Anschließend wurde die Temperatur während 14 Tagen schrittweise auf 15 °C und die Luftfeuchtigkeit auf 75% abgesenkt. Während dieser Reifungsphase bzw. Trocknungsphase wurden die Würste ferner für ca. 4 bis 6 Stunden Glimmrauch ausgesetzt, so dass die Würste geräuchert wurden. Nach dieser Fermentations-Reifungs- und Trocknungsphase zeigte der Anschnitt der Geflügelrohwurst ein homogenes Schnittbild, allerdings war die Masse bröselig. Der Geschmack der Geflügelrohwurst war sauer, was vermutlich darauf zurückzuführen ist, dass das Wasser während der Fermentations- und Reifungsphase nicht schnell genug ausgeleitet wurde, wodurch der pH Wert der Wurst auf Werte unterhalb von 4,5 sank. Dies ist auf den fehlenden Kapillareffekt der Wurstmasse zurückzuführen. Die Konsistenz und Stabilität der hergestellten Geflügelrohwurst war nicht mit den entsprechenden Eigenschaften einer herkömmlichen Geflügelrohwurst vergleichbar. Der Wasserverlust nach der Fermentations- Reifungs- und Trocknungsphase betrug durchschnittlich etwa 15%.

## Patentansprüche

1. Verfahren zum Herstellen von Geflügelrohwurst, insbesondere Geflügelsalami, **dadurch gekennzeichnet dass** einem Wurstbrät zerkleinerte Nüsse und/oder zerkleinerte Ölsaat beigefügt werden, und/oder dass einem Wurstbrät Nüsse und/oder Ölsaat zugegeben und diese Nüsse und/oder Ölsaat anschließend zerkleinert werden, wobei die Nüsse und/oder Ölsaat vor der Zugabe zu dem Wurstbrät in siedendem Wasser abgekocht werden, und wobei die Kochzeit maximal etwa 20 min, insbesondere maximal etwa 10 min und insbesondere maximal etwa 5 min beträgt.

2. Verfahren nach Anspruch 1, **dadurch gekennzeichnet, dass** auf die Zugabe von Speck, Fett von anderen Tieren als Gefiedertieren, Palmfett und gehärteten pflanzlichen Ölen verzichtet wird und/oder der Anteil an Geflügelfleisch in dem Wurstbrät den größten Teil ausmacht und insbesondere 100% beträgt.

3. Verfahren nach einem der vorhergehenden Ansprüche, **dadurch gekennzeichnet, dass** eine Endkörnung der Nüsse und/oder Ölsaat in der Geflügelrohwurst auf maximal 4 mm, insbesondere maximal 3 mm und insbesondere maximal 2 mm, eingestellt wird.

4. Verfahren nach einem der vorhergehenden Ansprüche, **dadurch gekennzeichnet, dass** die Nüsse und/oder Ölsaat ausgewählt sind aus: Haselnüssen, Erdnüssen, Macadamianüssen, Pecannüssen, Paranüssen, Pinienkernen, Walnüssen, Esskastanien, Bucheckern, Mandeln, Sonnenblumenkernen, Leinsamen, Kürbiskernen, Cashewkernen und Pistazien, insbesondere aus Haselnüssen, Walnüssen und Sonnenblumenkernen und insbesondere Sonnenblumenkernen.

5. Verfahren nach einem der vorhergehenden Ansprüche, **dadurch gekennzeichnet, dass** der Anteil an zerkleinerten Nüssen und/oder zerkleinerter Ölsaat mindestens 10 Gew.-% und insbesondere mindestens 15 Gew.-%, bezogen auf das Gesamtgewicht einer Wurstmischung, enthaltend Wurstbrät und Nüsse und/oder Ölsaat, beträgt.

6. Verfahren nach einem der vorhergehenden Ansprüche, **dadurch gekennzeichnet, dass** das Mischverhältnis Wurstbrät zu zerkleinerten Nüssen und/oder zerkleinerter Ölsaat in einer Wurstmischung, enthaltend Wurstbrät und Nüsse und/oder Ölsaat, 18:1 bis 2:1, insbesondere 9,5:1 bis 3,5:1 und insbesondere 6,9:1 bis 4,9:1, beträgt.

7. Verfahren nach einem der vorhergehenden Ansprüche, ferner umfassend einen Schritt des Kutterns und/oder des Wolfens, wobei insbesondere die Temperatur beim Kuttern und/oder Wolfen maximal 0 °C und insbesondere maximal -2 °C, beträgt, und/oder wobei insbesondere eine Endlochscheibe eines Füllwolfes Bohrungen von maximal 4 mm, insbesondere maximal 3 mm und insbesondere maximal 2 mm, aufweist.

8. Verfahren nach einem der vorhergehenden Ansprüche, **dadurch gekennzeichnet, dass** eine Wurstmischung enthaltend Wurstbrät und zerkleinerte Nüsse und/oder zerkleinerte Ölsaat, in Form gebracht, insbesondere in Därme abgefüllt wird.

9. Geflügelrohwurst, insbesondere Geflügelsalami hergestellt durch ein Verfahren nach einem der vorhergehenden Ansprüche, enthaltend Wurstbrät und zerkleinerte Nüsse und/oder Ölsaat, wobei insbesondere der Anteil an zerkleinerten Nüssen und/oder zerkleinerter Ölsaat mindestens 14 Gew.-% und insbesondere mindestens 20 Gew.-%, bezogen auf das Gesamtgewicht der Geflügelrohwurst, beträgt.

10. Geflügelrohwurst nach Anspruch 9, **dadurch gekennzeichnet, dass** die Geflügelrohwurst frei ist von Speck, Fett von anderen Tieren als Gefiedertieren, Palmfett und gehärteten pflanzlichen Ölen und/oder der Anteil an Geflügelfleisch in dem Wurstbrät den größten Teil ausmacht und insbesondere 100% beträgt.

11. Geflügelrohwurst nach Anspruch 9 oder 10, **dadurch gekennzeichnet, dass** das Wurstbrät Putenfleisch und/oder Hühnchenfleisch, insbesondere Putenbrust und/oder Hühnchenbrust ist.

12. Geflügelrohwurst nach einem der Ansprüche 9 bis 11, **dadurch gekennzeichnet, dass** eine Endkörnung der Nüsse und/oder Ölsaat maximal 4 mm, insbesondere maximal 3 mm und insbesondere maximal 2 mm, beträgt.

13. Geflügelrohwurst nach einem der Ansprüche 9 bis 12, **dadurch gekennzeichnet, dass** das Mischverhältnis Wurstbrät zu zerkleinerten Nüssen und/oder zerkleinerter Ölsaat in der Geflügelrohwurst 12:1 bis 1:1, insbesondere 6:1 bis 2:1 und insbesondere 4,3:1 bis 3:1, beträgt.

14. Verwendung von zerkleinerten, in siedendem Wasser mit einer maximalen Kochzeit von etwa 20 min, insbesondere maximal etwa 10 min und insbesondere maximal etwa 5 min, abgekochten Nüssen und/oder Ölsaat zur Stabilisierung von speckfreier, von Fett von anderen Tieren als Gefiedertieren freier, palmfettfreier und von gehärteten pflanzlichen Ölen freier Geflügelrohwurst und insbesondere Geflügelsalami.

## Claims

1. Method of producing poultry raw sausage, preferably poultry salami, **characterized in that** crushed nuts and/or crushed oilseeds are added to sausage meat, and/or that nuts and/or oilseeds are added to sausage meat and said nuts and/or oilseeds are subsequently crushed, wherein before addition to the sausage meat the nuts and/or oilseeds are boiled in boiling water, and wherein the cooking time is not more than about 20 min, particularly not more than about 10 min and particularly not more than about 5 min.

2. Method according to claim 1, **characterized in that** the addition of bacon, fat from other animals than feathered animals, palm fat and hardened vegetable oils is dispensed with and/or the proportion of poultry meat in the sausage meat makes up the largest part and is particularly 100%.

3. Method according to any one of the preceding claims, **characterized in that** a final grain size of the nuts and/or oilseeds in the poultry raw sausage is set to not more than 4 mm, particularly not more than 3 mm and particularly not more than 2 mm.

4. Method according to any one of the preceding claims, **characterized in that** the nuts and/or oilseeds are selected from: hazelnuts, peanuts, macadamia nuts, pecan nuts, Brazil nuts, pine nuts, walnuts, chestnuts, beechnuts, almonds, sunflower seeds, linseed, pumpkin seeds, cashew nuts and pistachios, particularly from hazelnuts, walnuts and sunflower seeds and particularly sunflower seeds.

5. Method according to any one of the preceding claims, **characterized in that** the proportion of crushed nuts and/or crushed oilseeds is at least 10% by wt. and particularly at least 15% by wt., based on the total weight of a sausage mixture, containing sausage meat and nuts and/or oilseeds.

6. Method according to any one of the preceding claims, **characterized in that** the mixing ratio of sausage meat to crushed nuts and/or crushed oilseeds in a sausage mixture, containing sausage meat and nuts and/or oilseeds, is 18:1 to 2:1, particularly 9.5:1 to 3.5:1 and particularly 6.9:1 to 4.9:1.

7. Method according to any one of the preceding claims, further comprising the step of cutting and/or mincing, wherein particularly the temperature during cutting and/or mincing is not more than 0°C and particularly not more than -2°C, and/or wherein particularly a final perforation disc of a filling mincer comprises holes of not more than 4 mm, particularly not more than 3 mm and particularly not more than 2 mm.

8. Method according to any one of the preceding claims, **characterized in that** a sausage mixture containing sausage meat and crushed nuts and/or crushed oilseeds, is shaped, particularly filled into casings.

9. Poultry raw sausage, particularly poultry salami, produced by a method according to any one of the preceding claims, containing sausage meat and crushed nuts and/or oilseeds, wherein particularly the proportion of crushed nuts and/or crushed oilseeds is at least 14% by wt. and particularly at least 20% by wt., based on the total weight of the poultry raw sausage.

10. Poultry raw sausage according to claim 9, **characterized in that** the poultry raw sausage is free of bacon, fat from other animals than feathered animals, palm fat and hardened vegetable oils, and/or the proportion of poultry meat in the sausage meat makes up the largest part and is particularly 100%.

11. Poultry raw sausage according to claim 9 or 10, **characterized in that** the sausage meat is turkey meat and/or chicken meat, particularly turkey breast and/or chicken breast.

12. Poultry raw sausage according to any one of claims 9 to 11, **characterized in that** a final grain size of the nuts and/or oilseeds is not more than 4 mm, particularly not more 3 mm and particularly not more than 2 mm.

13. Poultry raw sausage according to any one of claims 9 to 12, **characterized in that** the mixing ratio of sausage meat to crushed nuts and/or crushed oilseeds in the poultry raw sausage is 12:1 to 1:1, particularly 6:1 to 2:1 and particularly 4.3:1 to 3:1.

14. Use of crushed nuts and/or oilseeds boiled in boiling water with a maximum cooking time of about 20 min, particularly not more than about 10 min and particularly not more than about 5 min, for the stabilization of poultry raw sausage and particularly poultry salami which is free of bacon, free of fat from other animals than feathered animals, free of palm fat and free of hardened vegetable oil.

## Revendications

1. Procédé de fabrication de saucisse crue de volaille, en particulier de salami de volaille, **caractérisé en ce qu'**on ajoute à une chair à saucisse des fruits à coque broyés et/ou des graines oléagineuses broyées, et/ou **en ce qu'**on ajoute à une chair à saucisse des fruits à coque et/ou des graines oléagineuses puis on broie ces fruits à coque et/ou graines oléagineuses, sachant qu'on fait cuire les fruits à coque et/ou graines oléagineuses dans de l'eau bouillante avant de les ajouter à la chair à saucisse, et sachant que le temps de cuisson est au maximum d'environ 20 minutes, en particulier au maximum d'environ 10 minutes et notamment au maximum d'environ 5 minutes.

2. Procédé selon la revendication 1, **caractérisé en ce qu'**on renonce à ajouter du lard, de la graisse d'autres animaux que des animaux à plumes, de l'huile de palme et des huiles végétales hydrogénées, et/ou la part de viande de volaille dans la chair à saucisse en constitue la majeure partie et est notamment égale à 100%.

3. Procédé selon l'une des revendications précédentes, **caractérisé en ce qu'**on règle une granulométrie finale des fruits à coque et/ou graines oléagineuses dans la saucisse crue de volaille à 4 mm au maximum, en particulier à 3 mm au maximum et notamment à 2 mm au maximum.

4. Procédé selon l'une des revendications précédentes, **caractérisé en ce que** les fruits à coque et/ou graines oléagineuses sont sélectionnés parmi les suivants : noisettes, arachides, noix de macadamia, noix de pécan, noix du Brésil, pignons, noix, marrons, faînes, amandes, grains de tournesol, graines de lin, graines de courge, noix de cajou et pistaches, en particulier sont sélectionnés parmi les noisettes, les noix et les graines de tournesol et notamment sont des graines de tournesol.

5. Procédé selon l'une des revendications précédentes, **caractérisé en ce que** la part de fruits à coque broyés et/ou de graines oléagineuses broyées est d'au moins 10 % en poids et en particulier 15 % en poids, par rapport au poids total d'un mélange pour saucisse contenant de la chair à saucisse et des fruits à coque et/ou des graines oléagineuses.

6. Procédé selon l'une des revendications précédentes, **caractérisé en ce que** les proportions de mélange de la chair à saucisse par rapport aux fruits à coque broyés et/ou aux graines oléagineuses broyées, dans un mélange pour saucisse contenant de la chair à saucisse et des fruits à coque et/ou des graines oléagineuses, sont de 18:1 à 2:1, en particulier de 9,5:1 à 3,5:1 1 et notamment de 6,9:1 à 4,9:1.

7. Procédé selon l'une des revendications précédentes, comprenant en outre une étape de hachage au cutter et/ou au hache-viande, sachant notamment que la température lors du hachage au cutter et/ou au hache-viande est de 0 °C au maximum et en particulier de -2°C au maximum, et/ou sachant notamment qu'une grille finale d'un hache-viande présente des trous de 4 mm au maximum, en particulier de 3 mm au maximum et notamment de 2 mm au maximum.

8. Procédé selon l'une des revendications précédentes, **caractérisé en ce qu'**on met en forme un mélange pour saucisse contenant de la chair à saucisse et des fruits à coque broyés et/ou des graines oléagineuses broyées, en particulier on le remplit dans des boyaux.

9. Saucisse crue de volaille, en particulier salami de volaille, fabriquée au moyen d'un procédé selon l'une des revendications précédentes, contenant de la chair à saucisse et des fruits à coque broyés et/ou des graines oléagineuses broyées, sachant notamment que la part de fruits à coque broyés et/ou de graines oléagineuses broyées est d'au moins 14 % en poids et en particulier d'au moins 20 % en poids, par rapport au poids total de la saucisse crue de volaille.

10. Saucisse crue de volaille selon la revendication 9, **caractérisée en ce que** la saucisse crue de volaille est dépourvue de lard, de graisse d'autres animaux que des animaux à plumes, d'huile de palme et d'huiles végétales hydrogénées, et/ou la part de viande de volaille dans la chair à saucisse en constitue la majeure partie et est notamment égale à 100%.

11. Saucisse crue de volaille selon la revendication 9 ou 10, **caractérisée en ce que** la chair à saucisse est de la viande de dinde et/ou de la viande de poulet, en particulier du blanc de dinde et/ou du blanc de poulet.

12. Saucisse crue de volaille selon l'une des revendications 9 à 11, **caractérisé en ce qu'**une granulométrie finale des fruits à coque et/ou des graines oléagineuses est égale à 4 mm au maximum, en particulier à 3 mm au maximum et notamment à 2 mm au maximum.

13. Saucisse crue de volaille selon l'une des revendications 9 à 12, **caractérisé en ce que** les proportions de mélange de la chair à saucisse par rapport aux fruits à coque broyés et/ou aux graines oléagineuses broyées dans la saucisse crue de volaille sont de 12:1 à 1:1, en particulier de 6:1 à 2:1 1 et notamment de 4,3:1 à 3:1.

14. Utilisation de fruits à coque et/ou de graines oléagineuses broyés, cuits dans de l'eau bouillante avec un temps de cuisson maximal d'environ 20 minutes, en particulier au maximum d'environ 10 minutes et notamment au maximum d'environ 5 minutes, pour stabiliser de la saucisse crue de volaille et notamment du salami de volaille dépourvu de lard, dépourvu de graisse d'autres animaux que des animaux à plumes, dépourvu d'huile de palme et dépourvu d'huiles végétales hydrogénées.
